# EUROPÄISCHE PATENTSCHRIFT

(11) **EP 2 668 056 B1**
(45) Veröffentlichungstag und Bekanntmachung des Hinweises auf die Patenterteilung: **26.11.2014**
(21) Anmeldenummer: 11802918.0
(22) Anmeldetag: 20.12.2011
(51) Int. Cl.: B60K 26/02, B60T 7/00, G05G 1/50, G05G 1/30, B60T 7/06

(54) **BETÄTIGUNGSPEDAL FÜR KRAFTFAHRZEUGE**
ACTUATION PEDAL FOR A VEHICLE
PEDALEACTIONNEMENTPOUR VEHICULE

(30) Priorität: 27.01.2011 DE 102011003222
(43) Veröffentlichungstag der Anmeldung: 04.12.2013
(73) Patentinhaber: ZF Friedrichshafen AG, 88038 Friedrichshafen (DE)
(72) Erfinder: TIEMANN, Burkhard, 49152 Bad Essen (DE); ROGOWSKI, Waldemar, 49504 Lotte (DE); KAMPHAUS, Thorsten, 49393 Lohne (DE)
(86) Internationale Anmeldenummer: PCT/EP2011/073308
(87) Internationale Veröffentlichungsnummer: WO 2012/100881

(56) Entgegenhaltungen:
- EP-A2- 1 428 715
- WO-A1-2005/006104
- DE-A1-102008 033 621
- DE-U1- 8 421 914

## Beschreibung

Die Erfindung betrifft ein Betätigungspedal für Kraftfahrzeuge, insbesondere für die Bremsanlage derselben, gemäß dem Oberbegriff von Patentanspruch 1, wie DE 10 2008 033 621 A1 zeigt.

Gattungsgemäße Betätigungspedale der eingangs genannten Art werden seit langem bei Nutz- und Kraftfahrzeugen eingesetzt. Die Betätigungspedale haben hierbei hohen Anforderungen hinsichtlich Festigkeit und Verwindungssteifigkeit zu genügen. Dabei können - insbesondere in Situationen von Panik- oder Vollbremsungen - vom Fahrzeugführer außerordentlich hohe Kräfte auf das Betätigungspedal ausgeübt werden.

Eine hohe Verwindungssteifigkeit ist bei einem Betätigungspedal auch deshalb wünschenswert und erforderlich, um beim Treten des Betätigungspedals jederzeit ein direktes und sicheres Bremsgefühl für den Fahrzeugführer bereitzustellen, und ein seitliches Abrutschen vom Pedal zu vermeiden.

Aufgrund dieser Erfordernisse sind die gegenwärtig aus dem Stand der Technik bekannten und eingesetzten Betätigungspedale üblicherweise aus Stahl gefertigt. Zumeist werden derartige Betätigungspedale aus Stahlblech hergestellt, wobei der Herstellungsvorgang typischerweise mehrere Umformprozesse umfasst. Zusätzlich werden an den Pedalkörper als Basisblechteil nach der Umformung weitere Bauteile - beispielsweise zur Lagerung, zur Anbringung von Rückholfedern oder zur Betätigung von Endschaltern - angeschweißt.

Die damit verbundene, erhebliche Anzahl separater Bearbeitungsschritte verursacht - trotz Automatisierungstechnik bei der Herstellung derartiger gattungsgemäßer Betätigungspedale - auch im Vergleich zu anderen Fahrzeugkomponenten vergleichsweise hohe Kosten, auch da nach Beendigung des eigentlichen Formvorganges zusätzlich eine abschließende Oberflächenbehandlung in Form eines Farbanstrichs oder in Form einer korrosionsschützenden Beschichtung üblich bzw. erforderlich ist.

Auch sind die zur Formgebung des metallischen Pedalkörpers benötigten Tiefziehwerkzeuge vergleichsweise aufwändig und damit teuer in der Herstellung. Nicht zuletzt weisen die im Stand der Technik verwendeten, im Wesentlichen aus Stahl gefertigten Betätigungspedale auch eine vergleichsweise hohe Masse auf, wodurch das Leergewicht eines Kraftfahrzeugs dementsprechend erhöht wird.

Aus der DE 199 21 552 C2 ist ein insbesondere für die Bremsanlage eines Kraftfahrzeugs vorgesehenes Betätigungspedal bekannt, welches aus einem stählernen Metallkern und einer den Metallkern umgebenden Kunststoffummantelung besteht. Dieses aus dem Stand der Technik bekannte Betätigungspedal weist jedoch nach wie vor eine vergleichsweise hohe Masse auf. Gleichzeitig sind bei diesem Stand der Technik die mit dem Metallkern verbundenen, vergleichsweise hohen Herstellungskosten nach wie vor gegeben. Auch führt der bei diesem bekannten Betätigungspedal nicht (rohr- bzw. kastenförmig) geschlossene Querschnitt immer noch dazu, dass bei der Betätigung - aufgrund der damit vergleichsweise geringen Torsionssteifigkeit - Verwindungen auftreten können.

Mit diesem Hintergrund ist es somit Aufgabe der vorliegenden Erfindung, ein Betätigungspedal zu schaffen, mit dem die genannten, im Stand der Technik vorhandenen Einschränkungen überwunden werden. Insbesondere sollen mit der Erfindung kostengünstig herstellbare Betätigungspedale geschaffen werden, die mit besonders geringer Masse dargestellt werden können, und die somit das Leergewicht eines Kraftfahrzeugs, in welches sie eingebaut werden, nur unwesentlich erhöhen. Darüber hinaus soll eine hohe Biege- und Verwindungssteifigkeit des Betätigungspedals erreicht und damit das Betätigungsgefühl beim Bremsvorgang optimiert werden.

Diese Aufgabe wird durch ein Betätigungspedal mit den Merkmalen des Patentanspruchs 1 gelöst.

Bevorzugte Ausführungsformen sind Gegenstand der Unteransprüche.

In für sich genommen zunächst bekannter Weise umfasst das Betätigungspedal gemäß der vorliegenden Erfindung einen Pedalkörper, eine Lagereinrichtung zur schwenkbaren Festlegung des Betätigungspedals an einem karosseriefesten Pedalblock des Kraftfahrzeugs, sowie eine Betätigungstrittfläche zur Betätigung des Pedals durch den Fahrzeugführer.

Erfindungsgemäß jedoch zeichnet sich das Betätigungspedal dadurch aus, dass der Pedalkörper einen im Querschnitt zumindest einseitig offenen Profilträger (6) aus einem endlosfaserverstärkten Kunststoff sowie einen zumindest teilweise im Innenraum des Profilträgers angeordneten Füllkörper (7) umfasst. Dabei besteht der Füllkörper aus einem spritzgegossenen Kunststoff und verbindet gleichzeitig die beiden Ränder (10) bzw. Längskanten des Profilträgers im Bereich dessen offener Längsseite schubfest miteinander.

Die erfindungsgemäßen konstruktiven Merkmale des Betätigungspedals stellen - infolge der Kombination aus dem einseitig offenen Profilträger aus lang- bzw. endlosfaserverstärktem Kunststoff und dem die offenen Längskanten des Profilträgers schubfest verbindenden Füllkörper - zunächst einmal eine sehr hohe Biege- sowie Verwindungssteifigkeit und Bruchbelastbarkeit des Betätigungspedals sicher.

Dies hängt damit zusammen, dass der einseitig zunächst noch offene und damit für sich genommen torsionsweiche und wenig biegesteife Profilträger anhand der insbesondere schubfesten Verbindung seiner offenen Längskanten durch den Füllkörper effektiv die Eigenschaften eines (großvolumigen) geschlossenen Rohrprofils und damit eine sehr hohe Torsionssteifigkeit ebenso wie eine hohe Biegesteifigkeit erhält.

Darüber hinaus erlaubt die Ausführung des Betätigungspedals komplett aus Kunststoff sowohl eine freie und optimierte Formgebung für das Betätigungspedal, wobei der gesamte Herstellvorgang mittels der erfindungsgemäßen Hybridbauweise aus Profilträger und Füllkörper kostengünstig gestaltet werden kann, als auch eine im Vergleich mit einem Betätigungspedal aus Metall deutlich reduzierte Bauteilmasse. Zudem können im Rahmen der Produktion eine ganze Anzahl von Fertigungsschritten ebenso entfallen wie die nicht mehr notwendige abschließende Oberflächenbehandlung (insbesondere Korrosionsschutz bzw. Lackierung) des erfindungsgemäßen Betätigungspedals.

Die Erfindung wird dabei zunächst einmal unabhängig davon verwirklicht, welcher Art und Zusammensetzung der lang- bzw. endlosfaserverstärkte Kunststoff und/oder der spritzgegossene Füllkörper ist, solange die bei der Betätigung entstehenden Materialspannungen im zulässigen Bereich bleiben.

Gemäß bevorzugter Ausführungsformen der Erfindung handelt es sich bei dem Material des Profilträgers jedoch um einen lang- bzw. endlosfaserverstärkten Thermoplasten, vorzugsweise um ein Organoblech. Organobleche sind langfaserverstärkte oder endlosfaserverstärkte Platten aus üblicherweise thermoplastischen Kunststoffen, welche (nach Erwärmung) - prinzipiell ähnlich wie metallisches Blech - tiefgezogen werden können, und die anschließend - aufgrund der Langfaserverstärkung - ähnliche Steifigkeiten und eine ähnliche Belastbarkeit wie metallische Bauteile erreichen, dabei jedoch eine erheblich niedrigere Masse als die letzteren aufweisen.

Die Verwendung von Organoblech für den Profilträger des Betätigungspedals hat - neben der Gewichtsersparnis und der hohen spezifischen Belastbarkeit und Steifigkeit des Organoblechs - den zusätzlichen Vorteil, dass sich ein aus Organoblech gefertigter Profilträger und der im Spritzguss gefertigte Füllkörper bei der Urformung des Betätigungspedals - bzw. bei der Hinterspritzung des Profilträgers mit dem Füllkörper - besonders innig miteinander verbinden, da beide auf einem organischen Matrixwerkstoff in Form von thermoplastischem Kunststoff basieren.

Mit diesem Hintergrund ist gemäß einer weiteren Ausführungsform der Erfindung demzufolge vorgesehen, dass Profilträger und Füllkörper stoffschlüssig miteinander verbunden sind. Dies kann insbesondere dadurch erfolgen, dass der Profilträger in eine Spritzgussform eingelegt und bei der anschließenden Urformung des Füllkörpers in der Spritzgussform so mit dem Material des Füllkörpers hinterspritzt wird, dass sich eine stoffschlüssige Verbindung zwischen dem Matrixwerkstoff des Profilträgers und dem beim Spritzguss in die Form injizierten Material des Füllkörpers ergibt.

Der Profilträger kann dabei bereits entweder teilweise oder vollständig - entsprechend seiner endgültigen Form am Betätigungspedal - vorgeformt sein. Wahlweise kann die Ausformung (das Tiefziehen) des Profilträgers jedoch auch - teilweise oder vollständig - erst beim Schließen der Spritzgussform durch deren formgebende Kontur, sowie beim nachfolgenden Injizieren des Materials des Füllkörpers durch den Einspritzdruck des Spritzgusswerkzeugs erfolgen.

Eine weitere bevorzugte Ausführungsform der Erfindung sieht vor, dass die Ränder des lang- bzw. endlosfaserverstärkten Profilträgers im Bereich dessen offener Längsseite durch den Füllkörper vorzugsweise dreiseitig umspritzt sind. Auf diese Weise ergibt sich ein form- sowie ggf. stoffschlüssiger Einschluss der Ränder des Profilträgers durch die umspritzenden Bereiche des Füllkörpers, und damit eine besonders feste Verbindung zwischen den Rändern des Profilträgers und dem Füllkörper, was insbesondere der Biege- und Torsionssteifigkeit bzw. diesbezüglicher Versagenssicherheit des Betätigungspedals zugute kommt.

Gemäß einer weiteren, ebenfalls bevorzugten Ausführungsform der Erfindung umfasst der Füllkörper des Betätigungspedals einstückig auch die Lagereinrichtung zur Verbindung des Betätigungspedals mit dem karosseriefesten Pedalblock, die Betätigungstrittfläche und/oder weitere Lagerpunkte, Anschlussteile, Anschläge bzw. Kraftangriffspunkte für Schalter, Federn oder dergleichen. Auf diese Weise kann im Wesentlichen das gesamte Betätigungspedal einschließlich sämtlicher der genannten funktionalen Bereiche einstückig dargestellt werden, wodurch sowohl der Herstellungsaufwand als auch die Bauteilstückkosten, ebenso wie die Bauteilmasse weiter maßgeblich reduziert werden können.

Eine weitere besonders bevorzugte Ausführungsform der Erfindung sieht vor, dass der Füllkörper des Betätigungspedals eine Wabenstruktur aufweist. Dabei ist die Wabenstruktur im Wesentlichen prismatisch ausgebildet, und zudem offen entlang der Entformungsrichtung des Spritzgusswerkzeugs zur Formgebung des Füllkörpers bzw. des Betätigungspedals. Die Wabenstruktur des Füllkörpers führt dabei einerseits zu einem noch geringeren Gewicht des Betätigungspedals bei gleichzeitig nach wie vor hoher Torsions- und Biegesteifigkeit. Die prismatische Ausbildung der Wabenstruktur und deren entlang der Entformungsrichtung offene Struktur andererseits führen dazu, dass das Spritzgusswerkzeug für die Formgebung des Füllkörpers trotz der vergleichsweise hohen Formkomplexität des Betätigungspedals kostengünstig mit wenigen Einzelteilen bzw. Trennebenen, im Idealfall lediglich zweibis dreiteilig sowie mit einer einzigen Trennebene, ausgeführt werden kann.

Gemäß einer weiteren Ausführungsform der Erfindung ist dabei vorgesehen, dass die Wandungen der Wabenstruktur im Wesentlichen diagonal rautenförmig angeordnet sind. Durch die rautenförmige Anordnung und den - bezüglich der Längsachse des Betätigungspedals - diagonalen Verlauf der Wandungen der Wabenstruktur des Füllkörpers ergibt sich eine besonders effektive und schubsteife Verbindung der beiden Ränder des lang- bzw. endlosfaserverstärkten Profilträgers im Bereich dessen offener Längsseite durch den Füllkörper, insbesondere im Hinblick auf Scher- bzw. Schubkräfte, wie sie - bei Torsionsbelastung des Profilträgers - im Bereich dessen offener Längsseite zwischen den beiden dortigen Rändern bzw. Längskanten auftritt.

Eine weitere besonders bevorzugte Ausführungsform der Erfindung schließlich sieht vor, dass die innerhalb des Profilträgers befindlichen äußeren Begrenzungsoberflächen des Füllkörpers bei dessen Spritzguss überwiegend durch die Innenoberflächen des Profilträgers gebildet bzw. definiert sind. Dies bedeutet mit anderen Worten, dass große Bereiche der innerhalb des Profilträgers gelegenen äußeren Begrenzungsoberflächen des Füllkörpers nicht durch das Spritzgusswerkzeug bzw. durch dessen Kerne gebildet bzw. begrenzt werden, sondern unmittelbar durch die Innenoberflächen des Profilträgers selbst.

Auf diese Weise ergibt sich eine besonders innige und großflächige Verbindung zwischen dem Füllkörper und dem Profilträger, die bei geeigneter Materialwahl und Temperaturauslegung des Herstellungsprozesses zudem stoffschlüssig ausgebildet werden kann, indem der Werkstoff des Füllkörpers beim Spritzgießen den Matrixwerkstoff des Profilträgers oberflächlich erweicht bzw. aufschmilzt und somit mit diesem verschweißt.

Gemäß einer weiteren möglichen Ausführungsform der Erfindung kann vorgesehen sein, dass die beim Tiefziehen entstandene, offene Längsseite des Profilträgers zumindest teilweise durch eine mit den dort vorhandenen Rändern des Profilträgers stoffschlüssig verbundene Decklage verschlossen ist. Vorzugsweise ist dabei die Decklage im Bereich der offenen Längsseite des Profilträgers zudem auch stoffschlüssig mit dem Füllkörper verbunden. Die stoffschlüssige Verbindung der Decklage mit Profilträger bzw. Füllkörper kann wieder durch geeignete Prozess- und Temperaturführung beim Aufbringen der Decklage erfolgen, wobei die Decklage selbst vorzugsweise ebenfalls wieder aus einem plattenförmigen Kunststoffhalbzeug mit Endlosfaserverstärkung gebildet wird.

Auf diese Weise wird - in dem mit der Decklage verschlossenen Bereich des Profilträgers - ein rundum geschlossenes Hohlprofil erhalten, bei dem vorzugsweise auch der Füllkörper sowohl mit den Rändern bzw. Innenwandungen des Profilträgers als auch mit der Decklage stoffschlüssig verbunden ist. Hierdurch lassen sich die Torsions- und Biegesteifigkeiten des Pedalkörpers noch weiter erhöhen.

Im Folgenden wird die Erfindung anhand lediglich ein Ausführungsbeispiel darstellender Zeichnungen erläutert. Dabei zeigt:
- Fig. 1: in isometrischer Darstellung ein Betätigungspedal gemäß einer Ausführungsform der Erfindung in einer schrägen Aufsicht;
- Fig. 2: in einer Fig. 1 entsprechenden Darstellung den Profilträger des Pedalkörpers;
- Fig. 3: in einer Fig. 1 und 2 entsprechenden Darstellung den Füllkörper des Betätigungspedals;
- Fig. 4: einen Querschnitt durch Profilträger und Füllkörper des Betätigungspedals; und
- Fig. 5: in einer Draufsicht auf das Betätigungspedal die Lage der Schnittebene gemäß Fig. 4.

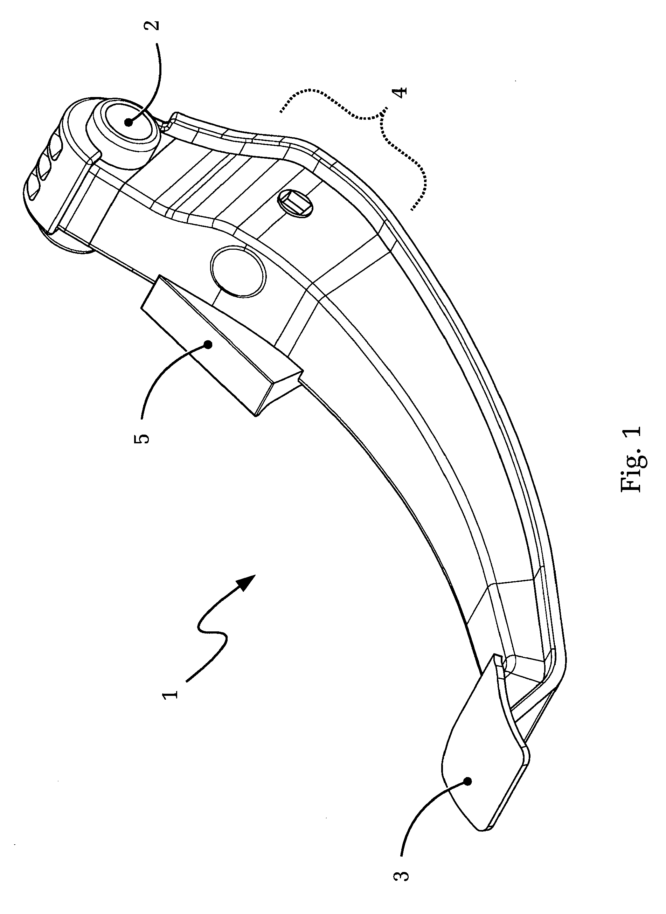

Fig. 1 zeigt ein erfindungsgemäßes Betätigungspedal mit einem Pedalkörper 1, einer Lagerbuchse 2 zur schwenkbaren Anbindung des Betätigungspedals an einen (nicht dargestellten) karosseriefesten Pedalblock des Kraftfahrzeugs, sowie mit einer Betätigungstrittfläche 3.

In einem Bereich 4 umfasst das Betätigungspedal im Inneren des Pedalkörpers 1 ferner eine Einrichtung zur Aufnahme des (nicht dargestellten) Kugelkopfs einer Kolbenstange zum Zweck der Bremskraftübertragung auf einen Bremskraftverstärker. Schließlich ist an den Pedalkörper 1 noch eine Anschlagfläche 5 angeformt, die als oberer Endanschlag des Betätigungspedals an der Karosserie bzw. am Pedalblock und/oder zur Betätigung eines Bremslichtschalters dient.

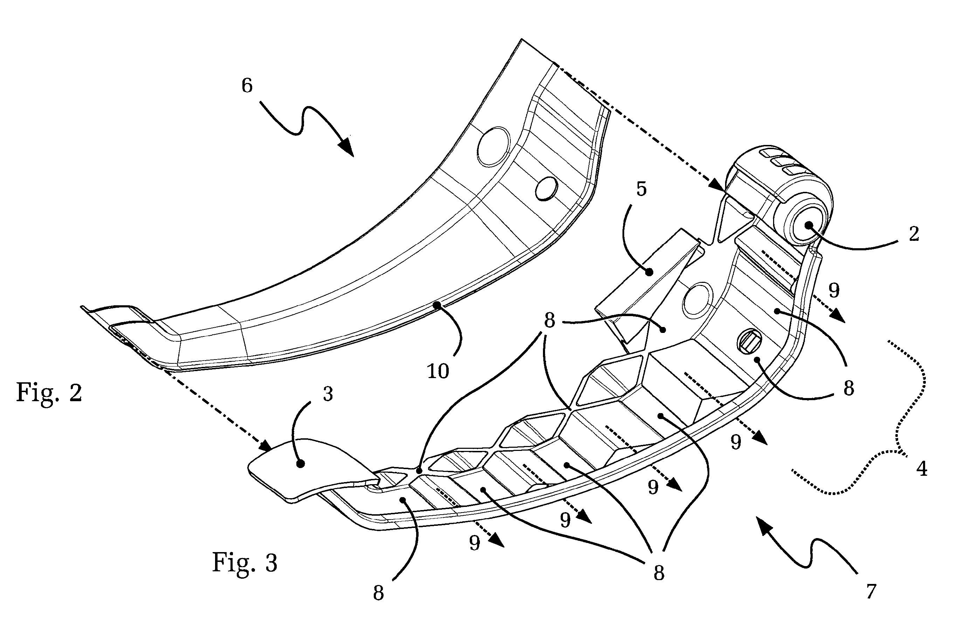

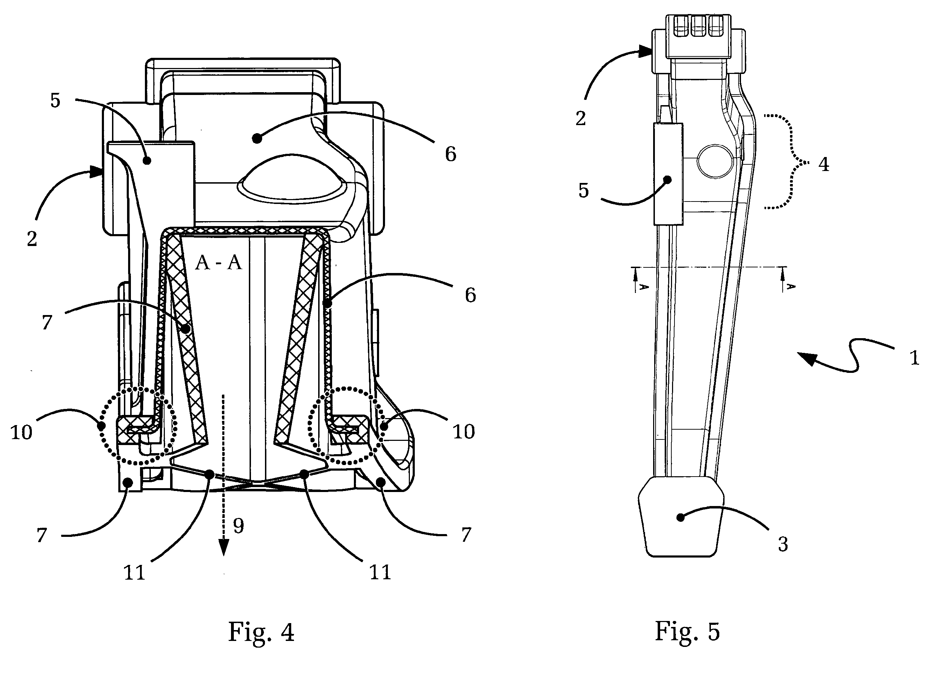

Bereits anhand von Fig. 1 wird erkennbar, dass das dargestellte Pedal - insbesondere in dem bei der Betätigung am stärksten belasteten Abschnitt im Bereich der Kugelkopfaufnahme 4 - einen verhältnismäßig großvolumigen Körper darstellt. Hierdurch sowie durch die Verwendung eines langfaser- bzw. endlosfaserverstärkten Organoblechs für den Profilträger 6 des Betätigungspedals (vgl. Fig. 2) und durch die schubsteife Verbindung der Ränder der offenen Längsseite des Profilträgers 6 durch den Füllkörper 7 (vgl. Fig. 4) ergibt sich eine für ein vollständig aus Kunststoff gefertigtes Betätigungspedal extrem hohe Biege- sowie insbesondere Torsionssteifigkeit.

Eine Zusammenschau der Fig. 2 und 3 (die zusammen eine Explosionsdarstellung des erfindungsgemäßen Betätigungspedals gemäß Fig. 1 bilden) zeigt, auf welche Weise sich das Betätigungspedal aus dem an einer Längsseite offenen Profilträger 6 sowie dem Füllkörper 7 zusammensetzt. Der Profilträger 6 besteht dabei aus einem tiefgezogenen Zuschnitt aus Organoblech, also aus einer langfaser- oder endlosfaserverstärkten thermoplastischen Kunststoffplatte, und weist einen im Wesentlichen Omega-förmigen, zeichnungsbezogen nach unten offenen Querschnitt auf, wie insbesondere am zeichnungsbezogen linksseitigen Ende des Profilträgers 6 erkennbar.

Der Innenraum des Profilträgers 6 wird dabei durch den Füllkörper 7 teilweise ausgefüllt. Der Füllkörper 7 ist durch Spritzguss erzeugt, wobei zuvor der Profilträger 6 in die Spritzgussform eingelegt wurde. Dies bedeutet mit anderen Worten, dass der Profilträger 6 durch den Füllkörper 7 hinterspritzt wird, wobei sich Füllkörper 7 und Profilträger 6 - mittels geeigneter Temperatur- und Prozessführung beim Spritzgießen - stoffschlüssig miteinander verbinden.

Die stoffschlüssige Verbindung zwischen Füllkörper 7 und Profilträger 6 erfolgt dabei insbesondere in den mit Bezugsziffer 8 bezeichneten äußeren Begrenzungsoberflächen des Füllkörpers 7, während die restlichen Oberflächen des Füllkörpers 7, insbesondere die Oberflächen der Wandungen der rautenförmigen Wabenstruktur des Füllkörpers 7, durch entsprechende Kerne einer Formhälfte des Spritzgusswerkzeugs definiert und erzeugt werden.

Um - im Falle des dargestellten Ausführungsbeispiels - einen einfachen Aufbau des Spritzgusswerkzeugs ohne Schieber und Hinterschnitte zu ermöglichen, ist der Füllkörper 7 nicht nur in den Innenräumen seiner rautenförmigen Wabenstruktur, sondern auch in den mit den Pfeilen 9 gekennzeichneten äußeren Bereichen der Wabenstruktur entlang der mit der Pfeilrichtung 9 übereinstimmenden Entformungsrichtung offen ausgeführt, so dass sich der dargestellte Füllkörper 7 mit einer im Wesentlichen nur zweiteiligen Spritzgussform erzeugen lässt.

Der Füllkörper 7 umfasst zudem auch sämtliche Zusatzfunktionen bzw. Krafteinleitungsbereiche, insbesondere die Lagerbuchse 2 zur schwenkbaren Verbindung des Betätigungspedals mit einem Pedalblock des Kraftfahrzeugs, die Betätigungstrittfläche 3, im Bereich 4 die Aufnahme für den Kugelkopf der Kolbenstange des Bremskraftverstärkers, sowie die Anschlagfläche 5 zur Begrenzung des Pedalwegs zeichnungsbezogen nach oben.

Alle Krafteinleitungsbereiche bzw. Zusatzfunktionen sind dabei einstückig mit dem Füllkörper 7 ausgebildet, und werden beim Spritzguss des Füllkörpers 7 gleichzeitig mit der Hinterspritzung des Trägers 6 realisiert bzw. ausgeformt. Dies bedeutet, dass das Betätigungspedal - einschließlich sämtlicher Funktionen und Anschlüsse - ohne jegliche weitere Montageschritte oder sonstige Nachbearbeitung unmittelbar nach der Entformung fertiggestellt ist. Ebenso kann eine - bei dem Betätigungspedal aus dem Stand der Technik grundsätzlich noch erforderliche - Oberflächenbehandlung des (dort metallischen) Pedalkörpers entfallen.

Anhand der Schnittdarstellung durch den Pedalkörper gemäß Fig. 4, wobei Fig. 5 den Schnittverlauf der Schnittdarstellung in Fig. 4 verdeutlicht, wird die Verbindung der beiden Ränder 10 des Profilträgers 6 in den Bereichen dessen offener Längsseite mittels des Füllkörpers 7 ersichtlich. Man erkennt, dass der Füllkörper 7 die Ränder 10 des Profilträgers 6 dreiseitig umschließt, wobei gleichzeitig durch die Stege 11 der Wabenstruktur des Füllkörpers 7 eine schubfeste Verbindung zwischen den beiden Rändern 10 des Profilträgers 6 gebildet wird. Der in Fig. 4 schräge Verlauf der Schnittflächen durch die Stege 10 des Füllkörpers 7 bedeutet dabei nicht, dass die Stege 10 schräg entlang der Entformungsrichtung 9 verlaufen (vgl. Fig. 3), sondern ergibt sich in der Darstellung der Fig. 4 lediglich durch die nicht parallel zur Entformungsrichtung 9 verlaufende Schnittebene A - A.

Insgesamt wird durch die schubfeste Verbindung der Ränder 10 des Profilträgers 6 mittels des Füllkörpers 7, sowie durch die mit dem Füllkörper 7 ebenfalls gegebene flächige Abstützung der Wandung des Profilträgers 6 (vgl. Fig. 2 und 3) ein effektiv geschlossenes, gegen Knicken und Beulen geschütztes, dünnwandiges aber großvolumiges Vierkant-Rohrprofil erhalten, dessen Wandung im Wesentlichen durch das faserverstärkte Organoblech des Profilträgers 6 gebildet wird. Gleichzeitig erfolgt die gesamte Krafteinleitung in den Profilträger 6 an den entsprechenden Stellen (insbesondere bei 2, 3 und 4) jeweils großflächig verteilt ebenfalls mittels des Füllkörpers 7.

Auf diese Weise wird es möglich, das erfindungsgemäße Betätigungspedal konstruktiv mit extrem hohen Steifigkeitswerten bezüglich Torsion sowie bezüglich Biegung - bei gleichzeitig sehr geringer Bauteilmasse - auszubilden.

Im Ergebnis wird somit deutlich, dass mit der Erfindung ein Betätigungspedal geschaffen wird, das kostengünstig herstellbar ist und eine minimale Anzahl an Bauteilen sowie eine sehr geringe Masse aufweist, wobei gleichzeitig hohe Anforderungen an die Steifigkeit und damit auch an die Betriebssicherheit und das Betätigungsgefühl beispielsweise beim Bremsvorgang erfüllt werden. Das erfindungsgemäße Betätigungspedal kann zudem einstückig diverse Funktionen, Kraftangriffspunkte und Anschlussbauteile umfassen, zusätzliche Montageschritte und die Notwendigkeit zur Oberflächenbehandlung können entfallen.

### Bezugszeichenliste

- 1: Pedalkörper
- 2: Lagereinrichtung, Lagerbuchse
- 3: Betätigungstrittfläche
- 4: Kugelkopfaufnahme
- 5: Anschlagfläche
- 6: Profilträger
- 7: Füllkörper
- 8: äußere Begrenzungsoberfläche, Verbindungsoberfläche
- 9: Entformungsrichtung
- 10: Profilträger-Randbereich
- 11: Wabenstruktur-Steg

## Patentansprüche

1. Betätigungspedal für Kraftfahrzeuge, insbesondere für die Bremsanlage derselben, das Betätigungspedal umfassend einen Pedalkörper (1), eine Lagereinrichtung (2) zur schwenkbaren Festlegung des Betätigungspedals an einem karosseriefesten Pedalblock des Kraftfahrzeugs sowie eine Betätigungstrittfläche (3),
**dadurch gekennzeichnet,**
**dass** der Pedalkörper (1) einen im Querschnitt zumindest einseitig offenen Profilträger (6) aus einem langfaser- oder endlosfaserverstärkten Kunststoff und einen zumindest teilweise im Innenraum des Profilträgers (6) angeordneten Füllkörper (7) aus einem spritzgegossenen Kunststoff umfasst, wobei der Füllkörper (7) die beiden Ränder (10) des Profilträgers (6) im Bereich dessen offener Längsseite miteinander schubfest verbindet.

2. Betätigungspedal nach Anspruch 1,
**dadurch gekennzeichnet,**
**dass** der Profilträger (6) aus einem lang- oder endlosfaserverstärkten Thermoplastwerkstoff besteht.

3. Betätigungspedal nach Anspruch 1 oder 2,
**dadurch gekennzeichnet,**
**dass** der Profilträger (6) aus einem Organoblechzuschnitt gebildet ist.

4. Betätigungspedal nach einem der Ansprüche 1 bis 3,
**dadurch gekennzeichnet,**
**dass** Profilträger (6) und Füllkörper (7) stoffschlüssig miteinander verbunden sind.

5. Betätigungspedal nach einem der Ansprüche 1 bis 4,
**dadurch gekennzeichnet,**
**dass** die Ränder (10) des Profilträgers (6) im Bereich dessen offener Längsseite durch den Füllkörper (7) dreiseitig umspritzt sind.

6. Betätigungspedal nach einem der Ansprüche 1 bis 5,
**dadurch gekennzeichnet,**
**dass** der Füllkörper (7) einstückig die Lagereinrichtung (2), die Betätigungstrittfläche (3) und/oder weitere Lagerpunkte (4), Anschlussteile, Anschläge (5) bzw. Kraftangriffspunkte für Schalter, Federn o. dgl. umfasst.

7. Betätigungspedal nach einem der Ansprüche 1 bis 6,
**dadurch gekennzeichnet,**
**dass** der Füllkörper (7) eine Wabenstruktur (11) aufweist, die im Wesentlichen prismatisch und offen entlang der Entformungsrichtung (9) des Spritzgusswerkzeugs ausgebildet ist.

8. Betätigungspedal nach Anspruch 7,
**dadurch gekennzeichnet,**
**dass** die Wandungen der Wabenstruktur (11) im Wesentlichen diagonal rautenförmig angeordnet sind.

9. Betätigungspedal nach einem der Ansprüche 1 bis 8,
**dadurch gekennzeichnet,**
**dass** die innerhalb des Profilträgers (6) befindlichen äußeren Begrenzungsoberflächen (8) des Füllkörpers (7) bei dessen Spritzguss überwiegend durch die Innenoberflächen des Profilträgers (6) definiert sind.

10. Betätigungspedal nach einem der Ansprüche 1 bis 9,
**dadurch gekennzeichnet,**
**dass** die offene Längsseite des Profilträgers (6) zumindest teilweise durch eine mit den Rändern des Profilträgers (6) stoffschlüssig verbundene Decklage verschlossen ist.

11. Betätigungspedal nach Anspruch 9,
**dadurch gekennzeichnet,**
**dass** die Decklage im Bereich der offenen Längsseite des tiefgezogenen Profilträgers (6) stoffschlüssig mit dem Füllkörper verbunden ist.

## Claims

1. Actuating pedal for vehicles, in particular for the braking system thereof, the actuating pedal comprising a pedal body (1), a bearing device (2), for pivotably securing the actuating pedal on a pedal block of the motor vehicle that is fixed to the body, and an actuating tread surface (3), **characterized in that** the pedal body (1) comprises a profiled support (6), which is open at least on one side in cross section and is composed of plastic reinforced by long fibres or continuous fibres, and a filler (7), which is at least partially arranged in the interior space of the profiled support (6) and is composed of injection-moulded plastic, the filler (7) connecting the two edges (10) of the profiled support (6) to one another in a shear-proof manner in the region of the open longitudinal side thereof.

2. Actuating pedal according to Claim 1, **characterized in that** the profiled support (6) consists of a thermoplastic material reinforced with long or continuous fibres.

3. Actuating pedal according to Claim 1 or 2, **characterized in that** the profiled support (6) is formed from a blank of organometallic sheet.

4. Actuating pedal according to one of Claims 1 to 3, **characterized in that** the profiled support (6) and the filler (7) are connected to one another in a material-bonded manner.

5. Actuating pedal according to one of Claims 1 to 4, **characterized in that** the edges (10) of the profiled support (6) are encapsulated on three sides in the region of the open longitudinal side thereof by the filler (7).

6. Actuating pedal according to one of Claims 1 to 5, **characterized in that** the filler (7) comprises in one piece the bearing device (2), the actuating tread surface (3) and/or further bearing points (4), connecting parts, stops (5) or force application points for switches, springs or the like.

7. Actuating pedal according to one of Claims 1 to 6, **characterized in that** the filler (7) has a honeycomb structure (11), which is of a substantially prismatic form and open along the demoulding direction (9) of the injection mould.

8. Actuating pedal according to Claim 7, **characterized in that** the walls of the honeycomb structure (11) are arranged in a substantially diagonally rhomboidal form.

9. Actuating pedal according to one of Claims 1 to 8, **characterized in that** the outer bounding surfaces (8) of the filler (7) that are located within the profiled support (6) are predominantly defined during the injection moulding thereof by the inner surfaces of the profiled support (6).

10. Actuating pedal according to one of Claims 1 to 9, **characterized in that** the open longitudinal side of the profiled support (6) is at least partially closed by an outer layer connected to the edges of the profiled support (6) in a material-bonded manner.

11. Actuating pedal according to Claim 9, **characterized in that** the outer layer is connected to the filler in a material-bonded manner in the region of the open longitudinal side of the thermoformed profiled support (6).

## Revendications

1. Pédale de commande pour véhicules, en particulier pour leur installation de freinage, la pédale de commande comprenant un corps de pédale (1), un dispositif de palier (2) pour la fixation pivotante de la pédale de commande sur un bloc de pédale fixé à la carrosserie du véhicule automobile ainsi qu'une surface de commande par pression du pied (3),
**caractérisée en ce que**
le corps de pédale (1) comprend un support profilé (6) en plastique renforcé par des fibres longues ou par des fibres sans fin, ouvert en section transversale au moins d'un côté, et un corps de remplissage (7) en plastique moulé par injection, disposé au moins en partie dans l'espace interne du support profilé (6), le corps de remplissage (7) reliant l'un à l'autre de manière fixée en glissement les deux bords (10) du support profilé (6) dans la région de son côté longitudinal ouvert.

2. Pédale de commande selon la revendication 1,
**caractérisée en ce que**
le support profilé (6) se compose d'un matériau thermoplastique renforcé par des fibres longues ou par des fibres sans fin.

3. Pédale de commande selon la revendication 1 ou 2, **caractérisée en ce que**
le support profilé (6) est formé par une pièce découpée en tôle organique.

4. Pédale de commande selon l'une quelconque des revendications 1 à 3,
**caractérisée en ce que**
le support profilé (6) et le corps de remplissage (7) sont connectés l'un à l'autre par engagement par liaison de matière.

5. Pédale de commande selon l'une quelconque des revendications 1 à 4,
**caractérisée en ce que**
les bords (10) du support profilé (6), dans la région de son côté longitudinal ouvert, sont revêtus d'un surmoulage sur trois côtés par le corps de remplissage (7).

6. Pédale de commande selon l'une quelconque des revendications 1 à 5,
**caractérisée en ce que**
le corps de remplissage (7) comprend d'une seule pièce le dispositif de palier (2), la surface de commande par pression du pied (3) et/ou d'autres points de palier (4), des pièces de raccordement, des butées (5) ou des points d'application de force pour des commutateurs, des ressorts ou similaires.

7. Pédale de commande selon l'une quelconque des revendications 1 à 6,
**caractérisée en ce que**
le corps de remplissage (7) présente une structure en nid d'abeilles (11) qui est réalisée sous forme essentiellement prismatique et ouverte le long de la direction de démoulage (9) de l'outil de moulage par injection.

8. Pédale de commande selon la revendication 7,
**caractérisée en ce que**
les parois de la structure en nid d'abeilles (11) sont disposées essentiellement en diagonale en forme de losange.

9. Pédale de commande selon l'une quelconque des revendications 1 à 8,
**caractérisée en ce que**
les surfaces limite extérieures (8) du corps de remplissage (7) se trouvant à l'intérieur du support profilé (6), lors du moulage par injection du corps de remplissage, sont essentiellement définies par les surfaces internes du support profilé (6).

10. Pédale de commande selon l'une quelconque des revendications 1 à 9,
**caractérisée en ce que**
le côté longitudinal ouvert du support profilé (6) est fermé au moins en partie par une couche de recouvrement reliée par engagement par liaison de matière avec les bords du support profilé (6).

11. Pédale de commande selon la revendication 9,
**caractérisée en ce que**
la couche de recouvrement est reliée dans la région du côté longitudinal ouvert du support profilé embouti (6) par engagement par liaison de matière avec le corps de remplissage.
